# FASCICULE DE BREVET EUROPEEN

(11) **EP 2 726 542 B1**
(45) Date de publication et mention de la délivrance du brevet: **24.06.2015**
(21) Numéro de dépôt: 12733644.4
(22) Date de dépôt: 29.06.2012
(51) Int. Cl.: C08J 7/00, C08L 67/03, C08L 77/00, C25D 5/56

(54) **PIECE PLASTIQUE A METALLISATION SELECTIVE ET PROCEDE DE FABRICATION CORRESPONDANT**
KUNSTSTOFFTEIL MIT SELEKTIVER METALLISIERUNG UND ENTSPRECHENDES HERSTELLUNGSVERFAHREN
PLASTIC PART WITH SELECTIVE METALLIZATION AND CORRESPONDING MANUFACTURING PROCESS

(30) Priorité: 29.06.2011 FR 1102021
(43) Date de publication de la demande: 07.05.2014
(73) Titulaire: Valeo Comfort and Driving Assistance, 94046 Créteil Cedex (FR)
(72) Inventeur: RENAUD, Olivier, F-94046 Créteil Cedex (FR); DELANDE, Benoît, F-94046 Créteil Cedex (FR)
(74) Mandataire: Pothmann, Karsten
(86) Numéro de dépôt international: PCT/EP2012/062670
(87) Numéro de publication internationale: WO 2013/001053

(56) Documents cités:
- EP-A2- 0 470 610
- WO-A1-2009/003901
- FR-A1- 2 573 443

## Description

La présente demande concerne le domaine des pièces plastiques à métallisation sélective et plus particulièrement les pièces plastiques à métallisation sélective dans le domaine de l'industrie automobile.

Les pièces plastiques à métallisation sélective sont généralement composées d'une ou plusieurs portions métallisées réalisées dans un matériau plastique et d'une ou plusieurs portions non-métallisées réalisées dans un autre matériau plastique.

Pour ces pièces plastiques à métallisation sélective, le matériau plastique métallisé utilisé est généralement l'acrylonitrile butadiène styrène (ABS) et le matériau plastique non-métallisé utilisé est généralement le polycarbonate (PC). Il est également courant d'utiliser comme matériau plastique métallisé un mélange acrylonitrile butadiène styrène (ABS) couplé avec du polycarbonate (PC).

Il est intéressant d'utiliser ces différents matériaux car l'ABS ou le mélange ABS/PC sont faciles à métalliser par galvanoplastie et le PC a une bonne résistance chimique aux bains utilisés lors du processus de métallisation de l'ABS ou du mélange ABS/PC.

Néanmoins, les propriétés mécaniques du PC ne sont parfois pas suffisantes pour remplir les exigences mécaniques liées à l'utilisation de certaines pièces mais également les exigences mécaniques imposées par les clients. Notamment, si l'on prend l'exemple d'une coque plastique d'un identifiant de véhicule automobile, par exemple un dispositif main libre ou une clé, dans lequel on dispose un mécanisme à insert déployable.

Dans ce dernier cas, il est avantageux d'utiliser un polyamide (PA) qui possède un module d'élasticité isostatique de l'ordre de 7500Mpa et une limite à la rupture de 135Mpa. Cependant, le polyamide (PA) ne peut être utilisé dans le cadre d'une métallisation sélective de la coque de l'identifiant de véhicule automobile car il est détérioré par les bains utilisés lors du processus de métallisation.

Une solution serait donc d'utiliser de l'ABS pour les portions métallisées de la coque de l'identifiant de véhicule automobile et du PC pour les portions non-métallisées. Cependant, le PC possède un module d'élasticité isostatique de l'ordre de 2400Mpa et une limite à la rupture de 68Mpa. Le PC est donc beaucoup moins résistants aux chocs et beaucoup plus déformable que le PA et ne répond pas aux exigences des constructeurs.

Il est donc déconseillé d'utiliser un tel matériau pour réaliser une coque d'identifiant de véhicule automobile ayant une métallisation sélective si l'on veut conserver les propriétés mécaniques imposées par les constructeurs pour ce type de pièces plastiques.

Un des buts de l'invention est donc de remédier au moins partiellement aux inconvénients de l'art antérieur et de proposer une pièce plastique à métallisation sélective répondant à des propriétés mécaniques élevées.

La présente invention concerne donc une pièce plastique à métallisation sélective comportant au moins une première portion non métallisée réalisée à partir d'un premier matériau plastique et au moins une seconde portion métallisée réalisée à partir d'un second matériau plastique, le premier matériau plastique étant un polyester semi-aromatique mélangé avec du polycarbonate et le second matériau plastique étant un polyamide.

Selon un aspect de l'invention, le polyester semi-aromatique est choisi parmi le polyéthylène téréphtalate et le polybutylène téréphtalate.

Selon un autre aspect de l'invention, le premier matériau plastique est renforcé par l'ajout de charge de type fibre de verre ou bille de verre.

Selon un autre aspect de l'invention, le métal de métallisation utilisé pour la métallisation de la pièce plastique est le chrome, ou le nickel.

Selon un autre aspect de l'invention, ladite pièce plastique est une coque d'un identifiant de véhicule automobile.

L'invention concerne également un procédé de fabrication d'une pièce plastique à métallisation sélective, comprenant les étapes suivantes :
- fourniture d'une pièce plastique comportant au moins une première portion réalisée à partir d'un polyester semi-aromatique mélangé avec du polycarbonate, et au moins une seconde portion réalisée à partir d'un polyamide,
- galvanoplastie de la pièce afin d'obtenir une métallisation sélective de la première portion.

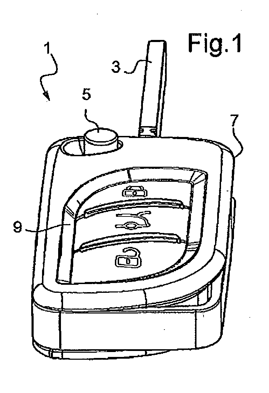

D'autres caractéristiques et avantages de l'invention apparaîtront plus clairement à la lecture de la description suivante, donnée à titre d'exemple illustratif et non limitatif, et de la figure 1 représentant une pièce plastique à métallisation sélective.

La figure 1 montre une pièce plastique 1 à métallisation sélective comportant au moins une première portion 7 non métallisée et au moins une seconde portion 9 métallisée.

L'exemple de pièce plastique 1 illustré par la figure 1 est un identifiant de véhicule automobile, plus précisément une clé comportant un paneton 3, une coque plastique comportant une première portion 7 non métallisée, une partie 9 métallisée et un bouton poussoir 5 de commande du paneton 3.

La première portion 7 non métallisée est réalisée à partir d'un premier matériau plastique tel qu'un polyester semi-aromatique mélangé avec du polycarbonate. Ledit polyester semi-aromatique étant avantageusement choisi parmi le polyéthylène téréphtalate (PET) et le polybutylène téréphtalate (PBT) du fait de leurs propriétés mécaniques et de résistance aux agressions chimiques.

Les propriétés mécaniques de ce premier matériau peuvent être augmentées en y ajoutant des charges de type fibre de verre ou bille de verre.

Il est ainsi possible d'obtenir par exemple pour un mélange PC/PBT/fibre de verre, un module d'élasticité isostatique de l'ordre de 10000Mpa et une limite à la rupture de 130Mpa.

La seconde portion 9 métallisée est réalisée à partir d'un second matériau plastique tel qu'un polyamide (PA).

La métallisation du PA par galvanoplastie nécessite l'emploi de bains beaucoup moins corrosifs que pour la métallisation de l'ABS, ainsi les premières portions 7 réalisées en polyester semi-aromatique mélangé avec du polycarbonate ont moins de risque d'être attaquées et détériorées lors de la galvanoplastie de la pièce plastique.

La présente invention concerne également un procédé de fabrication d'une pièce plastique 1 à métallisation sélective, comprenant les étapes suivantes :
- fourniture d'une pièce plastique 1 comportant au moins une première portion 7 réalisée à partir d'un polyester semi-aromatique mélangé avec du polycarbonate et au moins une seconde portion 9 réalisée à partir d'un polyamide,
- galvanoplastie de la pièce plastique 1 afin d'obtenir une métallisation sélective de la ou des première portions 7.

Lors de la fabrication de la pièce plastique 1, au moins une première portion 7 non métallisée est réalisée à partir d'un polyester semi-aromatique mélangé avec du polycarbonate, avantageusement choisi parmi le PET ou le PBT. Le polyester semi-aromatique mélangé avec du polycarbonate peut également être renforcé par l'ajout de charges de type fibre de verre ou bille de verre.

Toujours lors de la fabrication, au moins une seconde portion 9 métallisée est réalisée en PA.

Comme montré par la figure 1, Il peut bien évidement y avoir une ou plusieurs portions 7, 9 de chaque matériaux sur la même pièce plastique 1, selon les exigences liées à l'utilisation de la pièce plastique 1, selon des critères esthétiques ou encore selon les critères définis par le client.

Les différentes portions 7, 9 peuvent être réalisées séparément puis assemblées pour former la pièce plastique 1 ou certaines portions 7, 9 peuvent être surmoulées sur d'autres ou encore réalisées simultanément selon des méthodes bien connues de l'homme du métier et ce en fonction de la pièce plastique 1 finale et du résultat désiré après métallisation.

Lors de la galvanoplastie, la pièce plastique 1 passe dans différents bains permettant d'appliquer au moyen d'un courant électrique continu, un dépôt métallique, à la surface de la pièce plastique 1 sur la ou les secondes portions 9 réalisées en polyamide, le métal étant initialement sous forme de cations en solution dans un solvant.

Généralement dans un souci d'esthétisme et de protection, la métallisation selective est un dépôt de chrome sur la ou les secondes portions 9 réalisées en polyamide. Dans un autre mode de réalisation , le dépôt de chrome est remplacé par un dépôt de nickel.

Ainsi, grâce aux propriétés mécaniques et chimiques de ces matériaux, il est possible d'obtenir une pièce plastique 1 à métallisation sélective ayant elle-même des propriétés mécaniques suffisantes pour convenir par exemple à la confection une coque d'un identifiant de véhicule automobile.

## Revendications

1. Pièce plastique (1) à métallisation sélective comportant au moins une première portion (7) non métallisée réalisée à partir d'un premier matériau plastique non métallisable par galvanoplastie et au moins une seconde portion (9) métallisée réalisée à partir d'un second matériau plastique métallisable, **caractérisé en ce que** le premier matériau plastique est un mélange de polycarbonate et d'un polyester semi-aromatique et que le second matériau plastique est un polyamide.

2. Pièce plastique (1) selon la revendication 1, **caractérisé en ce que** le polyester semi-aromatique est choisi parmi le polyéthylène téréphtalate et le polybutylène téréphtalate.

3. Pièce plastique (1) selon l'une des revendications précédentes, **caractérisé en ce que** le premier matériau plastique est renforcé par l'ajout de charge de type fibre de verre ou bille de verre.

4. Pièce plastique (1) selon l'une des revendications précédentes, **caractérisé en ce que** le métal de métallisation utilisé pour la métallisation de la pièce plastique est le chrome.

5. Pièce plastique (1) selon l'une des revendications précédentes, **caractérisé en ce que** ladite pièce plastique est une coque d'un identifiant de véhicule automobile.

6. Procédé de fabrication d'une pièce plastique (1) à métallisation sélective, comprenant les étapes suivantes :
- fourniture d'une pièce plastique (1) comportant au moins une première portion (7) réalisée à partir d'un mélange de polycarbonate et d'un polyester semi-aromatique et au moins une seconde portion (9) réalisée à partir d'un polyamide,
- galvanoplastie de la pièce afin d'obtenir une métallisation sélective de la première portion (9).

7. Procédé de fabrication selon la revendication 6, **caractérisé en ce que** le polyester semi-aromatique est choisi parmi le polyéthylène téréphtalate et le polybutylène téréphtalate.

8. Procédé de fabrication selon l'une des revendications 6 et 7, **caractérisé en ce que** le mélange de polycarbonate et d'un polyester semi-aromatique est renforcé par l'ajout de charge de type fibre de verre ou bille de verre.

9. Procédé de fabrication selon l'une des revendications 6 à 8, **caractérisé en ce que** le métal déposé lors de la métallisation est du chrome.

## Patentansprüche

1. Kunststoffteil (1) mit selektiver Metallisierung, umfassend mindestens einen ersten nicht metallisierten Teil (7) aus einem ersten Kunststoffmaterial, das nicht durch Galvanisierung metallisierbar ist, und mindestens einen zweiten metallisierten Teil (9) aus einem zweiten metallisierten Kunststoffmaterial, **dadurch gekennzeichnet, dass** es sich bei dem ersten Kunststoffmaterial um eine Mischung von Polycarbonat und einem teilaromatischen Polyester handelt und es sich bei dem zweiten Kunststoffmaterial um ein Polyamid handelt.

2. Kunststoffteil (1) nach Anspruch 1, **dadurch gekennzeichnet, dass** der teilaromatische Polyester aus Polyethylenterephthalat und Polybutylenterephthalat ausgewählt ist.

3. Kunststoffteil (1) nach einem der vorhergehenden Ansprüche, **dadurch gekennzeichnet, dass** das erste Kunststoffmaterial durch Zusatz von Füllstoff vom Glasfaser- oder Glaskugel-Typ verstärkt ist.

4. Kunststoffteil (1) nach einem der vorhergehenden Ansprüche, **dadurch gekennzeichnet, dass** es sich bei dem für die Metallisierung des Kunststoffteils verwendeten Metallisierungsmetall um Chrom handelt.

5. Kunststoffteil (1) nach einem der vorhergehenden Ansprüche, **dadurch gekennzeichnet, dass** es sich bei dem Kunststoffteil um eine Hülle eines Identifikators eines Kraftfahrzeugs handelt.

6. Verfahren zur Herstellung eines Kunststoffteils (1) mit selektiver Metallisierung, das folgende Schritte umfasst:
- Bereitstellen eines Kunststoffteils (1) mit mindestens einem ersten Teil (7) aus einer Mischung von Polycarbonat und einem teilaromatischen Polyester und mindestens einen zweiten Teil (9) aus einem Polyamid,
- Galvanisieren des Teils zum Erhalt einer selektiven Metallisierung des ersten Teils (9).

7. Herstellungsverfahren nach Anspruch 6, **dadurch gekennzeichnet, dass** der teilaromatische Polyester aus Polyethylenterephthalat und Polybutylenterephthalat ausgewählt ist.

8. Herstellungsverfahren nach einem der Ansprüche 6 und 7, **dadurch gekennzeichnet, dass** die Mischung von Polycarbonat und einem teilaromatischen Polyester durch Zusatz von Füllstoff vom Glasfaser- oder Glaskugel-Typ verstärkt ist.

9. Herstellungsverfahren nach einem der Ansprüche 6 bis 8, **dadurch gekennzeichnet, dass** es sich bei dem bei der Metallisierung abgeschiedenen Metall um Chrom handelt.

## Claims

1. Plastic part (1) with selective metallization comprising at least one first nonmetallized portion (7) made from a first plastic material which cannot be metallized by electroplating and at least one second metallized portion (9) made from a second metallizable plastic material, **characterized in that** the first plastic material is a mixture of polycarbonate and a semiaromatic polyester and **in that** the second plastic material is a polyamide.

2. Plastic part (1) according to Claim 1, **characterized in that** the semiaromatic polyester is chosen from polyethylene terephthalate and polybutylene terephthalate.

3. Plastic part (1) according to either of the preceding claims, **characterized in that** the first plastic material is reinforced by the addition of filler of glass fiber or glass bead type.

4. Plastic part (1) according to one of the preceding claims, **characterized in that** the metallization metal used for the metallization of the plastic part is chromium.

5. Plastic part (1) according to one of the preceding claims, **characterized in that** said plastic part is a shell of a motor vehicle identifier.

6. Process for the manufacture of a plastic part (1) with selective metallization, comprising the following stages:
- providing a plastic part (1) comprising at least one first portion (7) made from a mixture of polycarbonate and a semiaromatic polyester and at least one second portion (9) made from a polyamide,
- electroplating the part in order to obtain selective metallization of the first portion (9).

7. Manufacturing process according to Claim 6, **characterized in that** the semiaromatic polyester is chosen from polyethylene terephthalate and polybutylene terephthalate.

8. Manufacturing process according to either of Claims 6 and 7, **characterized in that** the mixture of polycarbonate and a semiaromatic polyester is reinforced by the addition of filler of glass fiber or glass bead type.

9. Manufacturing process according to one of Claims 6 to 8, **characterized in that** the metal deposited during the metallization is chromium.
